# EUROPÄISCHE PATENTSCHRIFT

(11) **EP 4 347 165 B1**
(45) Veröffentlichungstag und Bekanntmachung des Hinweises auf die Patenterteilung: **04.06.2025**
(21) Anmeldenummer: 22726031.2
(22) Anmeldetag: 27.04.2022
(51) Int. Cl.: B23K 11/00, H01R 4/02, H01R 43/02, B23K 101/38, B23K 103/10, B23K 103/12

(54) **WIDERSTANDSSCHWEISSVERFAHREN**
RESISTANCE WELDING METHOD
PROCÉDÉ DE SOUDAGE PAR RÉSISTANCE

(30) Priorität: 26.05.2021 DE 102021113511
(43) Veröffentlichungstag der Anmeldung: 10.04.2024
(73) Patentinhaber: Auto-Kabel Management GmbH, 79688 Hausen i.W. (DE)
(72) Erfinder: BITNER, Urszula, 10247 Berlin (DE); SEBETLELA, Kabelo, 84028 Landshut (DE); REDDER, Marie, 9642 Ebnat-Kappel (CH)
(74) Vertreter: Cohausz & Florack
(86) Internationale Anmeldenummer: PCT/EP2022/061189
(87) Internationale Veröffentlichungsnummer: WO 2022/248148

(56) Entgegenhaltungen:
- WO-A1-2018/068909
- WO-A1-2021/053275
- DE-A1- 3 437 749
- JP-A- 2013 004 406
- US-A1- 2003 226 823

## Beschreibung

Der Gegenstand betrifft ein Widerstandsschweißverfahren sowie eine Vorrichtung zum Widerstandsschweißen, als auch ein Terminal hergestellt nach einem derartigen Verfahren.

Das Widerstandsschweißen elektrischer Leiter ist hinlänglich bekannt. Hierbei werden zwei zu verschweißende Werkstücke mit einander gegenüberliegenden Oberflächen an einer Grenzfläche aufeinander gelegt. Anschließend werden Schweißelektroden beidseitig der Grenzfläche an die Werkstücke angelegt und ein Schweißstrom fließt zwischen den beiden Elektroden. Der Schweißstrom kann konstant gepulst oder mit einer gewünschten Frequenz eingestellt sein.

Aufgrund des erhöhten Übergangswiderstands an der Grenzfläche zwischen den Werkstücken entsteht zwischen den Werkstücken ein erhöhter ohmscher Verlust und somit joulesche Wärme. Diese führt an der Grenzfläche zu einem Aufschmelzen der Werkstoffe der Werkstücke, so dass diese anschließend eine intermetallische Verbindung eingehen. Nach dem Auskühlen ist eine stoffschlüssige. Verbindung gebildet. US 2003/226823 A1 offenbart den Oberbegriff des Anspruchs 1.

Je nach Werkstoff und Materialstärke der Werkstücke schmelzen diese nicht nur an ihren Grenzflächen, sondern über einen weiteren Bereich auf. Dies führt zu einem Auseinanderfließen der Werkstoffe an der Verbindungsstelle. Um dies Vermeiden werden sogenannte Seitenschieber eingesetzt, die vor dem Verschweißen seitlich an die Werkstücke heran geführt werden. Bei bisherigen Verfahren liegen die Seitenschieber seitlich an den Seitenflächen an, die an die zu verschweißenden Oberflächen angrenzen.

Ein zu verschweißendes Werkstück, beispielsweise ein Flachprodukt oder Flachteil wird beispielsweise auf eine erste Elektrode aufgelegt. Auf der der Elektrode gegenüberliegenden Oberfläche des Werkstücks wird ein zu verschweißender Leiter aufgelegt. Seitenschieber werden bis an die Seitenwände des Leiters, die an die zu verschweißende Oberfläche angrenzen herangeführt. Somit bilden die Seitenwände Begrenzungen für die beim Schweißen aufschmelzenden Werkstoffe. Die zweite Elektrode wird dann zwischen den Seitenschiebern bis auf den zu verschweißenden Leiter bewegt und das oben beschriebene Widerstandsschweißen erfolgt.

Problematisch bei dem bekannten Verfahren ist aber, dass die zweite Elektrode, die zwischen die Seitenschiebe bewegt wird, eine Breite haben muss, die dem Abstand der Seitenschieber zueinander entspricht. Dieser Abstand der Seitenschieber zueinander ist definiert durch die Breite des zu verschweißenden Leiters. Wäre die Elektrode schmaler als der Abstand der Seitenschieber zueinander, bildete sich ein Hohlraum zwischen der zweiten Elektrode und den Seitenschiebern. Dieser Hohlraum würde durch das aufgeschmolzene Material aufgefüllt werden und es käme zu einem Verkleben der Seitenschieber an dem Werkstück und der Leitung durch das aufgeschmolzene Material. Dies ist unerwünscht.

Das oben beschriebene Problem führt dazu, dass für jede Leitergeometrie und Breite eines Terminals ein Schweißwerkzeug eigens eingerichtet und gerüstet werden muss. Dies führt zu erheblichen Rüstzeiten und Kosten.

Dem Gegenstand lag daher die Aufgabe zugrunde, ein Widerstandsschweißverfahren zur Verfügung zu stellen, welches universell für verschiedenste Leiter und Terminalgeometrien einsetzbar ist.

Diese Aufgabe wird gegenständlich durch ein Widerstandsschweißverfahren nach Anspruch 1 gelöst.

Gegenständlich wird vorgeschlagen, dass ein metallischer Leiter mit einem metallischen Terminal verschweißt wird. Der metallische Leiter kann aus einem metallischen Werkstoff gebildet sein. Der metallische Werkstoff kann dabei insbesondere Kupfer oder eine Kupferlegierung sein. Auch ist es möglich, dass der metallische Werkstoff Aluminium oder eine Aluminiumlegierung ist.

Das Terminal (auch als Werkstück bezeichnet) ist ebenfalls aus einem metallischen Werkstoff gebildet. Bevorzugt ist das Terminal aus einem der oben genannten metallischen Werkstoffe gebildet. Besonders bevorzugt ist das Terminal aus demselben metallischen Werkstoff gebildet, wie der metallische Leiter.

Zum Verschweißen sind zwei Elektroden vorgesehen. Das metallische Terminal, welches insbesondere ein Flachteil oder Flachstück ist, insbesondere mit einem mehreckigen Querschnitt, bevorzugt einem rechteckigen oder quadratischen Querschnitt, wird mit einer ersten Oberfläche auf die erste Elektrode aufgelegt. Hierbei kann es zu einem unmittelbaren Kontakt zwischen der ersten Oberfläche und der ersten Elektrode kommen. Auch ist es möglich, dass eine Leitpaste zwischen erster Oberfläche und erster Elektrode vorgesehen ist, um einen möglichst geringen Übergangswiderstand an der Grenzfläche zwischen erster Oberfläche und erster Elektrode zu gewährleisten.

Das metallische Terminal hat gegenständlich an einer zweiten Oberfläche, die der ersten Oberfläche gegenüberliegt, eine Ausnehmung. Diese Ausnehmung ist bevorzugt eine Vertiefung in der zweiten Oberfläche. Die Ausnehmung hat einen Boden. Die Ausnehmung kann als Sackloch, Nut oder Falz gebildet sein. Der Boden kann als Nutgrund gebildet sein. Die Ausnehmung ist auf der zweiten Oberfläche des Terminals angeordnet. Diese zweite Oberfläche liegt auf der der ersten Oberfläche gegenüberliegenden Seite. Die erste und die zweite Oberfläche verlaufen bevorzugt parallel zueinander.

In die Ausnehmung wird gegenständlich ein Leiter eingelegt. Insbesondere wird ein Leiterende, insbesondere ein abisoliertes Leiterende in die Ausnehmung eingelegt. Dabei wird der Leiter bevorzugt mit einer Oberfläche auf den Boden der Ausnehmung aufgelegt. Es kommt bevorzugt zu einen unmittelbaren Kontakt zwischen der Oberfläche des Leiters und dem Boden der Ausnehmung. Bevorzugt wird der Leiter mittig in der Ausnehmung angeordnet, d.h., dass der Leiter bevorzugt mit gleichen Abständen zu den Seitenkanten der Ausnehmung in der Ausnehmung angeordnet ist.

Die Ausnehmung hat, wie erwähnt, einen Boden. Ausgehend vom Boden erstrecken sich zumindest zwei Seitenwände in der Ausnehmung bis hin zur zweiten Oberfläche. Zwischen einer Seitenwand und der zweiten Oberfläche bildet sich eine Kante. Es sind zumindest zwei einander gegenüberliegende Kanten an einer Ausnehmung angeordnet. Bevorzugt sind drei einander angrenzende Kanten an der Ausnehmung vorgesehen und die Ausnehmung erstreckt sich über eine Seitenkante des Terminals hinaus bis in eine Seitenwand Ausnehmung. In einer Draufsicht ist die Ausnehmung in dem Terminal dann U-förmig gebildet.

Wenn der Leiter in die Ausnehmung eingelegt ist, wird vorgeschlagen, dass seitlich der Ausnehmung zumindest zwei einander gegenüberliegende Seitenschieber auf der zweiten Oberfläche aufgesetzt werden. Wesentlich ist, dass im Gegensatz zum Stand der Technik die Seitenschieber nicht an den einander gegenüberliegenden Seitenwänden des Leiters angelegt werden, sondern auf die Oberfläche, in der die Ausnehmung gebildet ist. Somit ist vor dem eigentlichen Schweißvorgang der Leiter in der Ausnehmung auf dem Boden der Ausnehmung aufgelegt und die Seitenschieber liegen auf der Oberfläche auf, in der die Ausnehmung gebildet ist.

Anschließend wird eine zweite Elektrode bevorzugt senkrecht in Richtung der ersten Elektrode auf den Leiter bewegt und auf dem Leiter abgesetzt. Es bildet sich somit ein elektrisch leitender Pfad zwischen der ersten Elektrode und der zweiten Elektrode über das Terminal und den Leiter. Zwischen dem Terminal und dem Leiter bildet sich am Boden der Ausnehmung eine Grenzfläche.

Zum Verschweißen wird ein Strom durch die beiden Elektroden geleitet. Dieser Strom fließt von der ersten Elektrode zu der zweiten Elektrode (oder umgekehrt, je nach Zählpfeilsystem). An der Grenzfläche zwischen dem Leiter und dem Terminal wird ein erhöhter ohmscher Widerstand auftreten, der zu joulescher Wärme führt, die zu einem Aufschmelzen der Werkstoffe von Leiter und Terminal zumindest an der Grenzfläche führt. Nach dem Auskühlen sind die aufgeschmolzenen Werkstoffe intermetallisch verbunden und ein Stoffschluss gebildet.

Aufgrund der Tatsache, dass der Leiter in die Ausnehmung eingelegt ist, bilden die Seitenwände der Ausnehmung natürliche Begrenzungen für die durch den Schweißvorgang sich plastifizierende Werkstoffe. Die aufgeschmolzenen Werkstoffe, insbesondere der aufgeschmolzene Werkstoff des Leiters, fließt zumindest teilweise in der Ausnehmung. Da die Seitenwände der Ausnehmung eine Begrenzung bilden, kommen gemäß der Erfindung die Seitenschieber nicht in Kontakt mit dem plastifizierten Material und somit kommt es nicht zu einer Verklebung.

Bevorzugt ist das Volumen der Ausnehmung zumindest genauso groß, bevorzugt größer als das Volumen des in die Ausnehmung gelegten Teils Leiters, insbesondere des Volumens des Werkstoffs des in die Ausnehmung gelegten Teils des Leiters. Eventuelle Lufteinschlüsse in dem Leiter werden nicht berücksichtigt. Wenn die Volumina in etwa gleich sind, verbleibt der Werkstoff des Leiters auch bei einem vollständigen Aufschmelzen vollständig innerhalb der Ausnehmung und fließt nicht über die Kanten der Ausnehmung auf die zweite Oberfläche. Dadurch wird verhindert, dass die auf der zweiten Oberfläche aufliegenden Seitenschieber mit dem plastifizierten Werkstoff des Leiters und/oder Terminals in Kontakt geraten und nach dem Auskühlen hiermit verkleben.

Da die Seitenschieber auf der zweiten Oberfläche aufliegen können, ist deren Abstand zueinander variabel. Das hat den Vorteil, dass der Abstand der Seitenschieber zueinander an die zweite Elektrode bzw. die lichte Weite der Seitenschieber an die Breite der zweiten Elektrode angepasst werden kann.

Selbst in dem Fall, in dem plastifizierter Werkstoff über die Kante der Ausnehmung fließt und in Kontakt mit den Seitenschiebern gelangt, ist die Kontaktoberfläche gegenüber herkömmlichen Schweißverfahren erheblich reduziert. Es kommt lediglich im Bereich eines Übergangs zwischen dem Seitenschieber und der zweiten Oberfläche zu einem Kontakt mit dem aufgeschmolzenen Material. Eine eventuell auftretende Verklebung kann durch leichte Kraftanwendung aufgelöst werden, ohne dass die Seitenschieber beschädigt werden. Auch kommt es zu keiner oder nur geringfügiger Anhaftung des Werkstoffs des aufgeschmolzenen Leiters an dem Seitenschieber.

Gemäß. einem Ausführungsbeispiel wird vorgeschlagen, dass der Leiter während des Verschweißens zumindest teilweise aufgeschmolzen (plastifiziert) wird. Durch das Aufschmelzen (Plastifizieren) kann der Werkstoff des Leiters in die Ausnehmung fließen bzw. sich in der Ausnehmung verteilen. Wenn das Volumen der Ausnehmung ausreichend groß ist, kann die Ausnehmung den Werkstoff des Leiters vollständig aufnehmen und es wird verhindert, dass aufgeschmolzener Werkstoff über die Kante auf die zweite Oberfläche und mithin an die Seitenschieber gelangt. Jedoch ist aufgrund der Tatsache, dass die Seitenschieber nur auf der zweiten Oberfläche aufliegen, gewährleistet, das selbst wenn aufgeschmolzener Werkstoff an die zweite Oberfläche gelangt, ein Anhaften der Seitenschieber im Wesentlichen vermieden ist. Die Kontaktoberfläche zwischen aufgeschmolzenem Material und Seitenschieber ist gegenständlich gegenüber herkömmlichen Verfahren erheblich reduziert.

Gemäß einem Ausführungsbeispiel wird vorgeschlagen, dass der Leiter vor dem Verschweißen über die Kante, die zwischen der Ausnehmung und der zweiten Oberfläche gebildet ist, hinausragt. Der Leiter ist bevorzugt in der Ausnehmung mit einem Abstand zu den Seitenwänden der Ausnehmung angeordnet. Erst durch das Verschweißen und die dabei einhergehende plastische Verformung kann sich der Leiter in der Ausnehmung verteilen.

Durch einen Anpressdruck, der durch die zweite Elektrode auf den Leiter in Richtung des Bodens der Ausnehmung ausgeübt wird, wird der Leiter plastisch verformt und in die Ausnehmung gedrückt. Somit ist nicht nur das Plastifizieren, sondern auch das plastische Verformen des Leiters aufgrund des Anpressdruckes der zweiten Elektrode dafür verantwortlich, dass der Leiter nach dem Verschweißen im Wesentlichen an das Querschnittsprofil der Ausnehmung angepasst ist. Hierbei wird ein plastifizierter Teil des Leiters als auch ein nicht plastifizierter Teil des Leiters so in die Ausnehmung gedrückt, dass der Querschnitt des Leiters dem Querschnitt der Ausnehmung im Wesentlichen entspricht.

Gemäß einem Ausführungsbeispiel wird vorgeschlagen, dass der Leiter nach dem Verschweißen bündig mit der zweiten Oberfläche in der Ausnehmung angeordnet ist. Wenn das Volumen der Ausnehmung und das Volumen des in der Ausnehmung angeordneten Leiters im Wesentlichen identisch sind, so kann sichergestellt werden, dass der Leiter, wenn er verschweißt ist, bündig mit der zweiten Oberfläche abschließt. Dies führt zu einer besonders guten Verarbeitbarkeit der Verbindung. Auch ist es möglich, dass das Volumen des in die Ausnehmung eingelegten Leiters geringer ist, als das Volumen der Ausnehmung. Dann kann es dazu kommen, dass nach dem Verschweißen der Leiter in die Ausnehmung hinein versetzt angeordnet ist. D.h., es ergibt sich ein Absatz zwischen der Oberfläche des Leiters und der zweiten Oberfläche und der Leiter liegt vollständig in der Ausnehmung angeordnet. Beide Varianten, die bündige Anordnung als auch die in die Ausnehmung hinein versetzte Anordnung führt zu einer geringeren Aufbauhöhe der Verbindung zwischen Leiter und Terminal als in herkömmlichen Verfahren, was insbesondere für beengte Bauräume vorteilhaft ist.

Gemäß der Erfindung wird vorgeschlagen, dass die Seitenschieber parallel zur zweiten Oberfläche über die zweite Oberfläche bis in den Bereich der Kante der Ausnehmung bewegt werden. In diesem Fall ist noch ein Abstand zwischen der Kante und der Ausnehmung und der dem Leiter zugewandten Fläche der Seitenschieber gewährleistet. Es ist gemäß einer nicht beanspruchten Alternative jedoch auch möglich, dass die Seitenschieber bis unmittelbar an die Kante der Ausnehmung heranbewegt werden. Im letztgenannten Fall ist die Gefahr zwar größer, dass plastifizierter Werkstoff des Leiters in Kontakt mit den Seitenschiebern gelangt, es wird jedoch verhindert, dass die zweite Oberfläche des Terminals durch aufgeschmolzenen und verfestigten Werkstoff des Leiters verunreinigt wird. Die Seitenschieber verhindern; dass der Werkstoff des Leiters während des Verschweißens an die zweite Oberfläche gelangt.

Gemäß einem Ausführungsbeispiel wird vorgeschlagen, dass die lichte Weite zwischen den Seitenschiebern vor dem Verschweißen der Breite der zweiten Elektrode im Wesentlichen entspricht. D.h., die Seitenschieber werden so aufeinander zu bewegt, dass der Abstand der einander zugewandten Wände der Seitenschieber dem Abstand der Seitenwände der Elektrode entspricht. Dann kann die Elektrode nahezu spielfrei oder in Spielfassung mit einer Toleranz von weniger als einen Millimeter zwischen die Seitenschieber bewegt werden und die Verschweißung durchführen.

Gemäß einem Ausführungsbeispiel wird vorgeschlagen, dass beim Verschweißen die zweite Elektrode mit einer Kraft gegen den Leiter gedrückt wird. Wie bereits erläutert, wird beim Verschweißen der Leiter nicht nur plastifiziert, sondern auch durch eine Anpresskraft der zweiten Elektrode plastisch verformt. Die plastische Verformung erfolgt durch den Anpressdruck mit der Kraft, mit der die zweite Elektrode gegen den Leiter gedrückt wird. Durch dieses plastische Verformen kann der Leiter in die Form der Ausnehmung gezwängt werden. Nach dem Schweißvorgang liegt die Leiter somit in der Ausnehmung.

Gemäß einem Ausführungsbeispiel wird vorgeschlagen, dass zu Beginn des Verschweißens die zweite Elektrode mit einer ersten Kraft gegen den Leiter gedrückt wird. Diese erste Kraft soll gewährleisten, dass der Leiter und das Terminal eine sich unmittelbar berührende Grenzfläche im Bereich des Bodens der Ausnehmung bilden. An dieser Grenzfläche kann der Strom eine ausreichend hohe joulesche Wärme zum Plastifizieren der Werkstoffe von Leiter und/oder Terminal bewirken. Nach dem Beginn des Schweißens wird die Elektrode dann mit einer zweiten Kraft, die größer als die erste Kraft ist, gegen den Leiter gedrückt. Durch dieses Nachdrücken wird der sich an der Grenzfläche plastifizierende Leiter und/oder das sich an der Grenzfläche plastifizierende Terminal plastisch verformt, so dass sich der Leiter an die Ausnehmung anpasst. Die zweite Kraft wird während des Verschweißvorgangs aufgebracht.

Gemäß einem Ausführungsbeispiel wird vorgeschlagen, dass nach einer Nachhaltezeit, nach dem Verschweißen, die zweite Elektrode von dem Leiter abgehoben wird. Die Nachhaltezeit ist bevorzugt derart gewählt, dass sich der aufgeschmolzene Werkstoff von Leiter und/oder Terminal wieder verfestigt hat. Die Dauer ist unter anderem abhängig von dem verwendeten Werkstoff, der Oberfläche der Verbindung zwischen den beiden Werkstücken, der Höhe des Schweißstroms und/oder der Dauer des Schweißvorgangs und kann entsprechend gewählt werden. Durch das Nachhalten wird gewährleistet, dass eine saubere, fehlerfreie stoffschlüssige Verbindung an der Grenzfläche gebildet wird. Die Grenzfläche, in der der Stoffschluss gebildet wird, wird durch das Nachhalten, während des Verfestigens mechanisch nicht belastet, so dass eine fehlerfreie stoffschlüssige Verbindung entsteht.

Gemäß einem Ausführungsbeispiel wird vorgeschlagen, dass der Leiter ein Litzenleiter oder ein Leitergeflecht ist.

Wie bereits erwähnt, wird der Leiter während des Verschweißens plastisch verformt. Diese plastische Verformung führt dazu, dass der Querschnitt des Leiters nach dem Verschweißen im Querschnitt der Ausnehmung angepasst der gleich ist. Vor dem Verschweißen kann der Leiter beispielsweise einen runden oder ovalen Leiterquerschnitt haben. Im Bereich der Ausnehmung kann dieser Querschnitt nach dem Verschweißen mehreckig, insbesondere quadratisch oder rechteckig sein.

Durch das plastische Verformen des Leiters kann bewirkt werden, dass ein an sich runder Leiter mit einer Abflachung in der Ausnehmung stoffschlüssig verbunden ist. Hierdurch wird die Aufbauhöhe der Verbindung gegenüber bisherigen Verfahren reduziert.

Gemäß einem Ausführungsbeispiel wird vorgeschlagen, dass sich die Ausnehmung ausgehend von einer Seitenkante des Terminals in einen Mittenbereich des Terminals erstreckt. Man kann sich dies wie eine Nut vorstellen, die von einer Seitenwand des Terminals bis in die Mitte des Terminals hineinreicht, jedoch nicht durchgehend ist. In einer Draufsicht ist die Ausnehmung dann U-förmig geformt. Die Nut kann natürlich auch durchgängig sein.

Gemäß einem Ausführungsbeispiel wird vorgeschlagen, dass der Seitenschieber aus einem elektrisch nicht leitfähigen Material ist. Hierdurch wird sichergestellt, dass für den Fall, dass die zweite Elektrode den Seitenschieber berührt, ein Strom nicht über den Seitenschieber in das Terminal fließen kann und dann an der Grenzfläche zwischen Seitenschieber und Terminal eine Verschweißung entsteht.

Gemäß einem Ausführungsbeispiel wird vorgeschlagen, dass nach dem Verschweißen durch den Leiter und das Terminal hindurch eine Durchgangsöffnung geformt wird. Dies kann insbesondere durch Bohren oder Stanzen erfolgen. Die Durchgangsbohrung kann insbesondere zumindest teilweise im Bereich der Schweißung vorgesehen sein.

Dadurch, dass der Leiter in die Ausnehmung eingelegt wird, insbesondere mit seinem abisolierten Leiterende und beim Verschweißen plastisch verformt und plastifiziert wird, ist eine Kantenvorbereitung des Leiters nicht notwendig. Insbesondere ist es nicht notwendig, die abisolierte Stirnkante des Leiters mittels eines Schnitts zu begradigen oder die Litzen eines Leiters in eine Ebene zu bringen. Dies macht den Herstellungsprozess besonders einfach.

Gemäß einem Ausführungsbeispiel wird vorgeschlagen, dass in einer Draufsicht die Breite der Ausnehmung größer ist, als die Breite des ungeschweißten Leiters. Durch das plastische Verformen und Plastifizieren beim Schweißen kann der Leiter auf den Boden gedrückt werden. Hierdurch kann eine besonders große Auflagefläche zwischen dem Leiter und dem Terminal gebildet werden, was den Übergangswiderstand im verschweißten Zustand erheblich reduziert.

Gemäß einem Ausführungsbeispiel wird vorgeschlagen, dass vor dem Verschweißen eine Stirnkante des Leiters an eine Seitenwand der Ausnehmung angelegt wird. Insbesondere wird die Stirnkante des Leiters an die Seitenkante der Ausnehmung angelegt, die in Richtung der Seitenwand ausgerichtet ist, von aus der der Leiter in die Ausnehmung eingelegt ist.

Durch das Verformen des Leiters kann dieser im Bereich der Verschweißung abgeflacht werden und somit eine geringe Aufbauhöhe realisiert werden.

Nachfolgend wird der Gegenstand anhand einer Ausführungsbeispiele zeigenden Zeichnung näher erläutert. In der Zeichnung zeigen:
- Fig. 1a-c: ein Schweißvorgang gemäß einem Ausführungsbeispiel;
- Fig. 2a-d: Draufsichten auf verschweißte Leiter;
- Fig. 3: ein Terminal zum Verschweißen mit einer Ausnehmung gemäß einem Ausführungsbeispiel;
- Fig. 4: ein Leiter zum Verschweißen gemäß einem Ausführungsbeispiel.

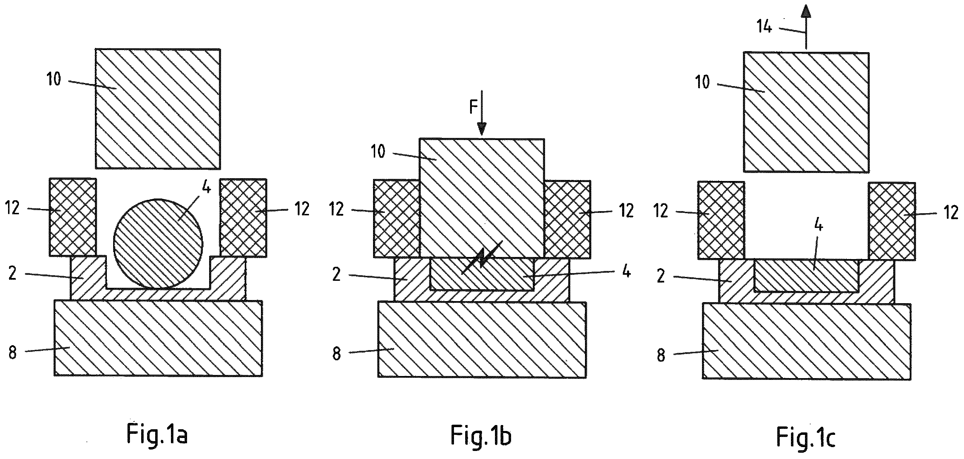

Fig. 1a zeigt eine schematische Darstellung eines Terminals 2, welches mit einem Leiter 4 verschweißt werden soll.

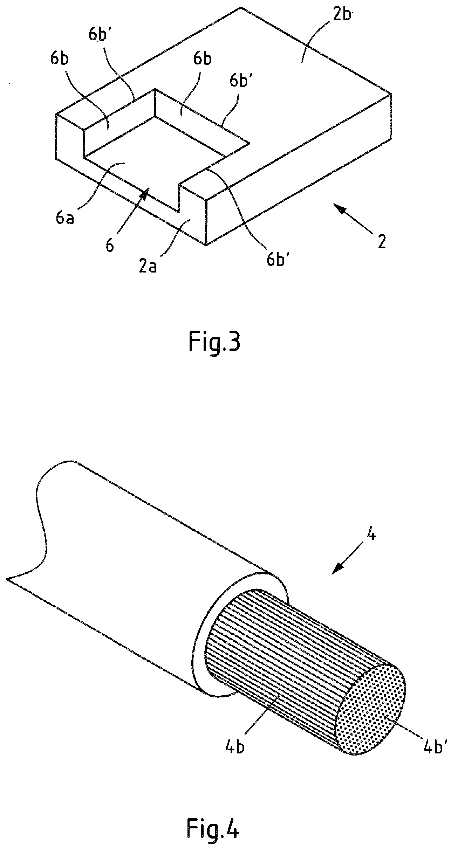

Das Terminal 2 ist in Fig. 3 näher dargestellt. Zu erkennen ist, dass das Terminal 2 einen rechteckigen Querschnitt mit einer Ausnehmung 6 hat. Die Ausnehmung 6 erstreckt sich von einer Stirnfläche 2a bis in einen Mittenbereich 2b des Terminals 2. Wie zu erkennen ist, hat die Ausnehmung 6 einen Boden 6a und Seitenwände 6b. Das Terminal hat eine obere Oberfläche, und die Ausnehmung 6 bildet in der oberen Oberfläche Kanten 6b'. An den Kanten 6b' springt die Ausnehmung 6 von der oberen Oberfläche des Terminals 2 zurück.

In dieses Terminal 2 kann ein Leiter 4, wie er in der Fig. 4 dargestellt ist, eingelegt werden. Der Leiter 4 kann ein abisoliertes Ende 4b aufweisen. Das abisolierte Ende 4b wird mit seiner Stirnfläche 4b' gegen eine Seitenwand 6b der Ausnehmung 6 gelegt und gleichzeitig auf dem Boden 6a abgelegt.

Diese Anordnung zwischen Terminal 2 und Leiter 4 ist in der Fig. 1a zu erkennen. Ferner ist in der Fig. 1a zu erkennen, dass das Terminal 2 auf einer ersten Elektrode 8 aufgesetzt ist.

Auf der ersten Elektrode 8 gegenüber liegenden Seite ist eine zweite Elektrode 10 vorgesehen. Die Elektroden 8, 10 können aufeinander zu- und voneinander wegbewegtwerden. Die Elektroden 8, 10 sind aus einem elektrisch leitfähigen Material gebildet. Selbiges gilt für Terminal 2 und Leiter 4. Ein Material (auch Werkstoff genannt) kann beispielsweise Kupfer oder eine Kupferlegierung sein. Auch kann Aluminium oder eine Aluminiumlegierung vorgesehen sein. Andere Nichteisenmetalle können ebenfalls als Werkstoff verwendet werden.

Nachdem das Terminal 2 auf der Elektrode 8 abgesetzt wurde, kann der Leiter 4 auf der der Elektrode abgewandten Seite in die Ausnehmung 6 eingelegt und auf dem Boden 6a abgelegt werden. Wie in der Fig. 1a zu erkennen ist, ist der Leiter 4 mittig in der Ausnehmung 6 angeordnet.

Auf der oberen Oberfläche, die der Elektrode 8 abgewandt ist, werden auf dem Terminal 2 Seitenschieber 12 aufgesetzt. Die Seitenschieber 12 werden mit einer Andruckkraft gegen die obere Oberfläche des Terminals 2 gedrückt und in Richtung der Kanten 6b' bewegt.

Wie in der Fig. 1a zu erkennen ist, ist der Abstand der Seitenschieber 12 zueinander, also deren lichte Weite, ausreichend groß, so dass die Elektrode 10 zwischen die Seitenschieber 2 auf den Leiter zubewegt werden kann.

Nachdem die Seitenschieber 12 platziert sind wird, wie in der Fig. 1b gezeigt, die Elektrode 10 mit einer Kraft F in Richtung der Elektrode 8 bewegt. Dabei drückt die Elektrode 8 den Leiter 4 auf das Terminal 2, insbesondere in die Ausnehmung 6. Zwischen den Elektroden 10, 8 wird ein Stromfluss aktiviert, der an der Grenzfläche zwischen Terminal 2 und Leiter 4 zu joulescher Wärme führt und somit einem zumindest teilweise Aufschmelzen der Werkstoffe.

Die Kraft F führt dazu, dass der Leiter 4 plastisch verformt wird. Der plastifizierte Teil zusammen mit dem verformten Leiter 4 kann die Ausnehmung 6 ausfüllen. Nach dem Schweißvorgang und einer Nachhaltezeit wird die Elektrode 10 in Richtung 14 von der Elektrode 8 wegbewegt, wie in der Fig. 1c gezeigt. Der Leiter 4 ist mit dem Terminal 2 verschweißt. Hierbei ist, wie in der Fig. 1c zu erkennen, die Oberfläche des Leiters 4 plan mit der oberen Oberfläche des Terminals 2. Es ist jedoch auch möglich, dass die Oberfläche des Leiters 4 in die Ausnehmung 6 zurückspringt.

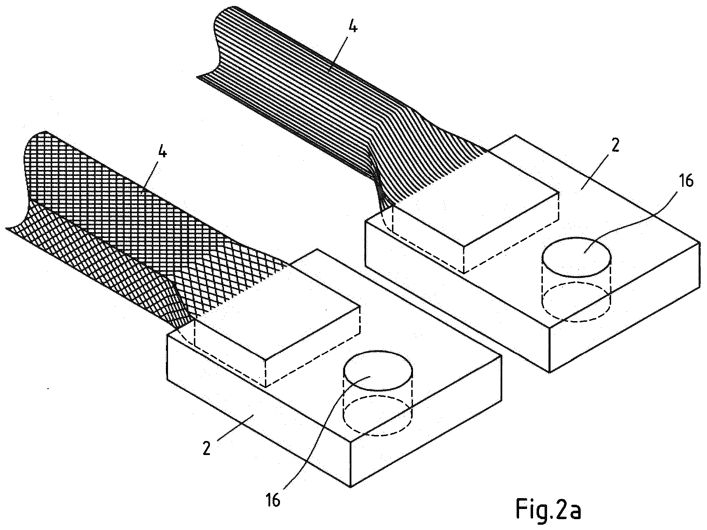

Mit Hilfe des gezeigten Verfahrens ist es möglich, Terminals 2 mit verschiedenen Leitern 4 zu verbinden. Fig. 2a zeigt beispielsweise oben ein Terminal 2, welches mit einem Litzenleiter 4 verbunden ist. Zu erkennen ist, dass in einer Draufsicht die Ausnehmung 6 breiter ist, als der Durchmesser des unbearbeiteten Litzenleiters 4. Hierdurch wird eine große Kontaktfläche zwischen Terminal 2 und Leiter 4 im Bereich der Ausnehmung 6 ermöglicht. Im Terminal 2 kann eine Durchgangsbohrung oder Stanzung 16 vorgesehen sein.

Fig. 2a zeigt unten ein weiteres Beispiel mit dem einzigen Unterschied, dass der Leiter 4 kein Litzenleiter, sondern ein Litzengeflecht ist.

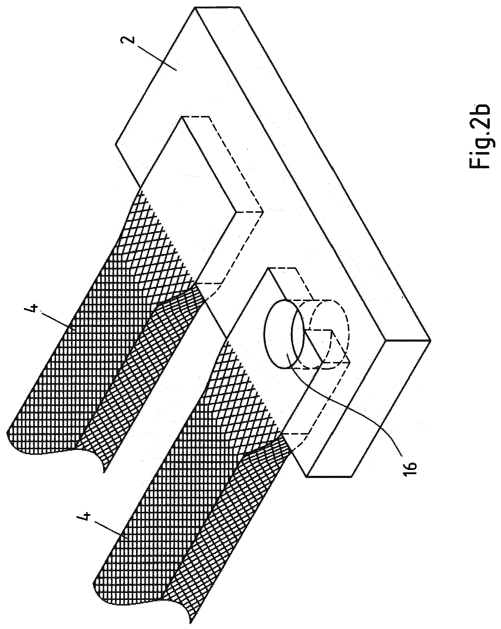

Fig. 2b zeigt eine weitere Möglichkeit eines Terminals 2, welches mit Leitern 4 als Litzengeflecht in zwei Ausnehmungen 6 verbunden ist. Im Bereich einer der Ausnehmungen 6 kann durch den Leiter 4 und das Terminal 2 eine Durchgangsöffnung 16 vorgesehen sein.

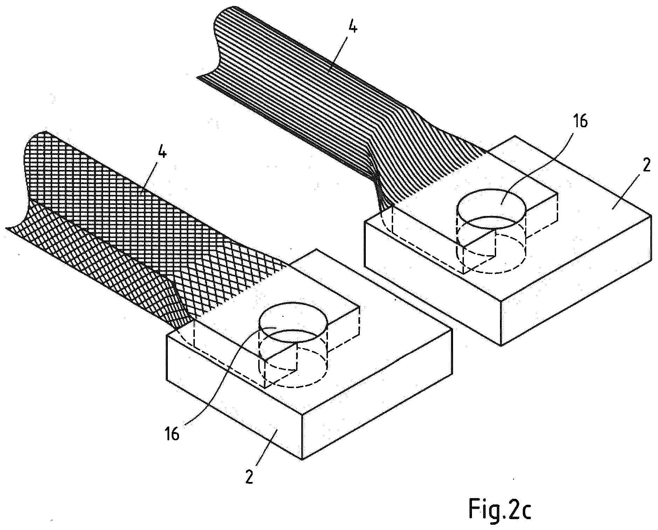

Fig. 2c zeigt ein ähnliches Beispiel, wie Fig. 2a, wobei hier im Unterschied jedoch die Durchgangsöffnung 16 nicht ausschließlich im Bereich des Terminals 2, sondern durch den Leiter 4 im Bereich der Ausnehmung 6 angeordnet ist. Dies kann sowohl für Litzenleitungen (oben) als auch Leitergeflechte (unten) gelten.

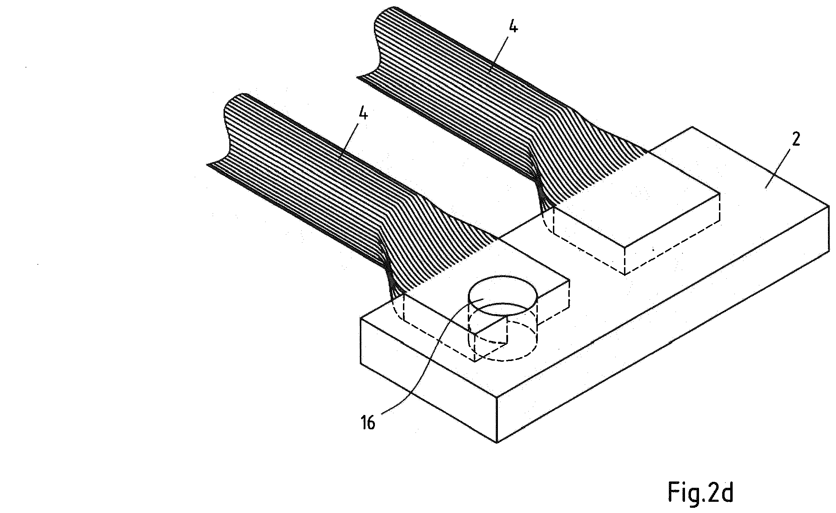

Schließlich zeigt Fig. 2d ein zur Fig. 2b korrespondierendes Ausführungsbeispiel, wobei hier jedoch die Leiter 4 als Litzenleiter gebildet sind.

Mit Hilfe des gezeigten Verfahrens ist es möglich, Leiter in einer besonders vorteilhaften Weise miteinander zu verschweißen, ohne dass es im Bereich der Schweißstelle zu Verklebungen mit Seitenschiebern kommt. Gleichzeitig wird um die Schweißnaht herum die Oberfläche des Terminals durch die Seitenschieber geschützt und nicht verunreinigt.

### Bezugszeichenliste

- 2: Terminal
- 2a: Stirnfläche
- 2b: Mittenbereich
- 4: Leiter
- 4a: Ende
- 4b': Stirnfläche
- 6: Ausnehmung
- 6a: Boden
- 6b: Seitenwand
- 6b': Kante
- 10, 8: Elektrode
- 12: Seitenschieber
- 14: Richtung

## Patentansprüche

1. Widerstandsschweißverfahren bei dem
- ein metallischer Leiter (4) mit einem metallischen Terminal (2) verschweißt wird wobei
- das metallische Terminal (2) mit einer ersten Oberfläche auf eine erste Elektrode (8) aufgesetzt wird,
- der metallische Leiter (4) auf einen Boden (6a) einer Ausnehmung (6) aufgelegt wird, wobei die Ausnehmung (6) in einer zweiten, der ersten Oberfläche gegenüberliegenden Oberfläche angeordnet ist, **dadurch gekennzeichnet, dass**
- seitlich der Ausnehmung (6) zumindest zwei Seitenschieber (12) auf der zweiten Oberfläche aufgesetzt werden, wobei zwischen einer Kante (6b') der Ausnehmung (6) und einer dem Leiter (4) zugewandten Fläche der Seitenschieber (12) ein Abstand gebildet ist, und wobei die Seitenschieber (12) parallel zur zweiten Oberfläche über die zweite Oberfläche bis in den Bereich der Kante (6b') der Ausnehmung (6) bewegt werden,
- eine zweite Elektrode (10) in Richtung (14) der ersten Elektrode (8) auf den Leiter (4) bewegt wird und
- der Leiter (4) mit dem Terminal (2) im Bereich der Ausnehmung (6) mittels eines Stromes, der zwischen der ersten und der zweiten Elektrode (8, 10) fließt, verschweißt wird, wobei die Seitenwände (6b) der Ausnehmung (6) eine Begrenzung für den durch den Schweißvorgang sich plastifizierenden Werkstoff des Leiters (4) bilden, und die Seitenschieber (12) nicht in Kontakt mit dem plastifizierten Material kommen.

2. Widerstandsschweißverfahren nach Anspruch 1,
**dadurch gekennzeichnet,**
- **dass** der Leiter (4) während des Verschweißens zumindest teilweise plastifiziert wird.

3. Widerstandsschweißverfahren nach Anspruch 1 oder 2,
**dadurch gekennzeichnet,**
- **dass** der Leiter (4) vor dem Verschweißen über die Kante (6b') , die zwischen der Ausnehmung (6) und der zweiten Oberfläche gebildet ist, hinaus ragt**.**

4. Widerstandsschweißverfahren nach Anspruch 1 oder 2,
**dadurch gekennzeichnet,**
- **dass** der Leiter (4) nach dem Verschweißen bündig mit der zweiten Oberfläche in der Ausnehmung (6) angeordnet ist oder dass der Leiter (4) nach dem Verschweißen zu der zweiten Oberfläche in die Ausnehmung (6) hinein versetzt angeordnet ist.

5. Widerstandsschweißverfahren nach einem der vorangehenden Ansprüche,
**dadurch gekennzeichnet,**
- **dass** die lichte Weite zwischen den Seitenschiebern (12) vor dem Verschweißen der Breite der zweiten Elektrode (10) im Wesentlichen entspricht.

6. Widerstandsschweißverfahren nach einem der vorangehenden Ansprüche,
**dadurch gekennzeichnet,**
- **dass** beim Verschweißen die zweite Elektrode (10) mit einer Kraft gegen den Leiter (4) gedrückt wird insbesondere
- **dass** zu Beginn des Verschweißens die zweite Elektrode (10) mit einer ersten Kraft gegen den Leiter (4) gedrückt wird und dass nach dem Beginn und während des Verschweißens die zweite Elektrode (10) mit einer zweiten, gegenüber der ersten Kraft größeren Kraft gegen den Leiter (4) gedrückt wird.

7. Widerstandsschweißverfahren nach einem der vorangehenden Ansprüche,
**dadurch gekennzeichnet,**
- **dass** nach einer Nachhaltezeit nach dem Verschweißen die zweite Elektrode (10) vom dem Leiter (4) abgehoben wird und/oder
- **dass** nach einer Nachhaltezeit nach dem Verschweißen die Seitenschieber (12) von der Ausnehmung (6) weg bewegt werden.

8. Widerstandsschweißverfahren nach einem der vorangehenden Ansprüche,
**dadurch gekennzeichnet,**
- **dass** der Leiter (4) ein Litzenleiter oder ein Leitergeflecht ist.

9. Widerstandsschweißverfahren nach einem der vorangehenden Ansprüche,
**dadurch gekennzeichnet,**
- **dass** der Leiter (4) und/oder das Terminal (2) aus Kupfer oder einer Kupferlegierung gebildet sind und/oder
- **dass** der Seitenschieber (12) aus einen elektrisch nicht leitfähigem Material gebildet ist..

10. Widerstandsschweißverfahren nach einem der vorangehenden Ansprüche,
**dadurch gekennzeichnet,**
- **dass** der Leiter (4) im Bereich der Ausnehmung (6) vor dem Verschweißen ein erstes Leiterprofil hat und nach dem Verschweißen ein zweites, von dem ersten verschiedenes Leiterprofil hat, insbesondere dass das zweite Leiterprofil einem Querschnittsprofil der Ausnehmung (6) angepasst ist.

11. Widerstandsschweißverfahren nach einem der vorangehenden Ansprüche,
**dadurch gekennzeichnet,**
- **dass** sich die Ausnehmung (6) ausgehend von einer Seitenkante des Terminals (2) in einen Mittenbereich (2b) des Terminals (2) erstreckt.

12. Widerstandsschweißverfahren nach einem der vorangehenden Ansprüche,
**dadurch gekennzeichnet,**
- **dass** nach dem Verschweißen durch den Leiter (4) und das Terminal (2) hindurch eine Durchgangsöffnung geformt, insbesondere gebohrt oder gestanzt wird.

13. Widerstandsschweißverfahren nach einem der vorangehenden Ansprüche,
**dadurch gekennzeichnet,**
- **dass** in einer Draufsicht die Breite der Ausnehmung (6) größer ist als die Breite des Leiters (4).

14. Widerstandsschweißverfahren nach einem der vorangehenden Ansprüche,
**dadurch gekennzeichnet,**
- **dass** vor dem Verschweißen eine Stirnkante des Leiters (4) an eine Seitenwand (6b) der Ausnehmung (6) angelegt wird.

15. Widerstandsschweißverfahren nach einem der vorangehenden Ansprüche,
**dadurch gekennzeichnet,**
- **dass** der Leiter (4) im Bereich der Verschweißung abgeflacht wird.

## Claims

1. Resistance welding method in which
- a metallic conductor (4) is welded to a metallic terminal (2), wherein
- the metallic terminal (2) is placed with a first surface onto a first electrode (8),
- the metallic conductor (4) is placed on a bottom (6a) of a recess (6), wherein the recess (6) is arranged in a second surface opposite the first surface, **characterized in that**
- at least two side sliders (12) are placed on the second surface lateral of the recess (6) wherein a distance is formed between an edge (6b') of the recess (6) and a surface of the side sliders (12) facing the conductor (4), and wherein the side slides (12) are moved in parallel to the second surface over the second surface into the region of the edge (6b') of the recess (6),
a second electrode (10) is moved in the direction (14) of the first electrode (8) onto the conductor (4), and
- the conductor (4) is welded to the terminal (2) in the region of the recess (6) by means of a current flowing between the first and the second electrode (8, 10), wherein the side walls (6b) of the recess (6) form a boundary for the material of the conductor (4) which is plasticized by the welding operation, and the side sliders (12) do not come into contact with the plasticized material.

2. Resistance welding method according to claim 1,
**characterized in**
- **that** the conductor (4) is at least partially plasticized during the welding.

3. Resistance welding method according to claim 1 or 2,
**characterized in**
- **that** the conductor (4) projects beyond the edge (6b'), which is formed between the recess (6) and the second surface, before welding.

4. Resistance welding method according to claim 1 or 2,
**characterized in**
- **that** the conductor (4) is arranged in the recess (6) flush with the second surface after welding, or that the conductor (4) is arranged offset into the recess (6) with respect to the second surface after welding.

5. Resistance welding method according to one of the preceding claims,
**characterized in**
- **that** the clear width between the side sliders (12) before welding essentially corresponds to the width of the second electrode (10).

6. Resistance welding method according to one of the preceding claims,
**characterized in**
- **that** during welding the second electrode (10) is pressed against the conductor (4) with a force, in particular
- **that** at the start of welding the second electrode (10) is pressed against the conductor (4) with a first force and that after the start of and during welding the second electrode (10) is pressed against the conductor (4) with a second force which is greater than the first force.

7. Resistance welding method according to one of the preceding claims,
**characterized in**
- **that** after a dwell time after the welding, the second electrode (10) is lifted off from the conductor (4) and/or
- **that** after a dwell time after the welding, the side sliders (12) are moved away from the recess (6).

8. Resistance welding method according to one of the preceding claims,
**characterized in**
- **that** the conductor (4) is a stranded conductor or a braided conductor.

9. Resistance welding method according to one of the preceding claims,
**characterized in**
- **that** the conductor (4) and/or the terminal (2) are formed from copper or a copper alloy and/or
- **that** the side slider (12) is formed from an electrically non-conductive material.

10. Resistance welding method according to one of the preceding claims,
**characterized in**
- **that** the conductor (4) in the region of the recess (6) has a first conductor profile before welding and has a second conductor profile after welding, which is different from the first, in particular that the second conductor profile is matched to a cross-sectional profile of the recess (6).

11. Resistance welding method according to one of the preceding claims,
**characterized in**
- **that** the recess (6) extends from a side edge of the terminal (2) into a central region (2b) of the terminal (2).

12. Resistance welding method according to one of the preceding claims,
**characterized in**
- **that** after the welding, a through-opening is formed, in particular drilled or punched, through the conductor (4) and the terminal (2).

13. Resistance welding method according to one of the preceding claims,
**characterized in**
- **that**, in a plan view, the width of the recess (6) is greater than the width of the conductor (4).

14. Resistance welding method according to one of the preceding claims,
**characterized in**
- **that** prior to the welding, an end edge of the conductor (4) is placed against a side wall (6b) of the recess (6).

15. Resistance welding method according to one of the preceding claims,
**characterized in**
- **that** the conductor (4) is flattened in the area of the weld.

## Revendications

1. Procédé de soudage par résistance dans lequel
- un conducteur métallique (4) est soudé à une borne métallique (2), où
- la borne métallique (2) est placée avec une première surface sur une première électrode (8),
- le conducteur métallique (4) est placé sur un fond (6a) d'un évidement (6), où l'évidement (6) est disposé dans une deuxième surface opposée à la première surface, **caractérisé en ce que**
- au moins deux coulisseaux latéraux (12) sont placés sur la deuxième surface, où latéralement de l'évidement (6), un espace est formé entre un bord (6b') de l'évidement (6) et une surface des coulisseaux latéraux (12) orientée vers le conducteur (4), et les coulisseaux latéraux (12) sont déplacés parallèlement à la deuxième surface, à travers la deuxième surface, jusque dans la zone du bord (6b') de l'évidement (6),
- une deuxième électrode (10) est déplacée en direction (14) de la première électrode (8) sur le conducteur (4) et
- le conducteur (4) est soudé au terminal (2) dans la zone de l'évidement (6) par un courant qui circule entre la première et la deuxième électrode (8, 10), où les parois latérales (6b) de l'évidement (6) forment une limite pour le matériau du conducteur (4) qui se plastifie lors du processus de soudage, et les coulisseaux latéraux (12) n'entrent pas en contact avec le matériau plastifié.

2. Procédé de soudage par résistance selon la revendication 1,
**caractérisé en ce**
- **que** le conducteur (4) est au moins partiellement plastifié pendant le soudage.

3. Procédé de soudage par résistance selon la revendication 1 ou 2,
**caractérisé en ce**
- **que** le conducteur (4) dépasse du bord (6b') formé entre l'évidement (6) et la deuxième surface avant le soudage.

4. Procédé de soudage par résistance selon la revendication 1 ou 2,
**caractérisé en ce**
- **que** le conducteur (4) est disposé après le soudage à fleur de la deuxième surface dans l'évidement (6) ou que le conducteur (4) est disposé après le soudage de manière décalée par rapport à la deuxième surface dans l'évidement (6).

5. Procédé de soudage par résistance selon l'une des revendications précédentes,
**caractérisé en ce**
- **que** la largeur intérieure entre les coulisseaux latéraux (12) correspond essentiellement à la largeur de la deuxième électrode (10) avant le soudage.

6. Procédé de soudage par résistance selon l'une des revendications précédentes,
**caractérisé en ce**
- **que** lors du soudage, la deuxième électrode (10) est pressée contre le conducteur (4) avec une force, en particulier
- **qu'**au début du soudage, la deuxième électrode (10) est pressée contre le conducteur (4) avec une première force et qu'après le début et pendant le soudage, la deuxième électrode (10) est pressée contre le conducteur (4) avec une deuxième force plus importante que la première.

7. Procédé de soudage par résistance selon l'une des revendications précédentes,
**caractérisé en ce**
- **que**, après un temps de maintien après le soudage, la deuxième électrode (10) est soulevée du conducteur (4) et/ou
- **qu'**après un temps de maintien après le soudage, les coulisseaux latéraux (12) sont éloignés de l'évidement (6).

8. Procédé de soudage par résistance selon l'une des revendications précédentes,
**caractérisé en ce**
- **que** le conducteur (4) est un conducteur à fils ou un conducteur tressé.

9. Procédé de soudage par résistance selon l'une des revendications précédentes,
**caractérisé en ce**
- **que** le conducteur (4) et/ou la borne (2) sont en cuivre ou en alliage de cuivre et/ou
- **que** le coulisseau latéral (12) est formé d'un matériau non conducteur d'électricité.

10. Procédé de soudage par résistance selon l'une des revendications précédentes,
**caractérisé en ce**
- **que** le conducteur (4) a un premier profil de conducteur dans la zone de l'évidement (6) avant le soudage et un deuxième profil de conducteur différent du premier après le soudage, en particulier que le deuxième profil de conducteur est adapté à un profil de section transversale de l'évidement (6).

11. Procédé de soudage par résistance selon l'une des revendications précédentes,
**caractérisé en ce**
- **que** l'évidement (6) s'étend à partir d'un bord latéral du terminal (2) jusqu'à une zone centrale (2b) du terminal (2).

12. Procédé de soudage par résistance selon l'une des revendications précédentes,
**caractérisé en ce**
- **qu'**après le soudage, une ouverture de passage est formée, en particulier percée ou poinçonnée, à travers le conducteur (4) et le terminal (2).

13. Procédé de soudage par résistance selon l'une des revendications précédentes,
**caractérisé en ce**
- **que** la largeur de l'évidement (6) est supérieure à la largeur du conducteur (4) en vue de dessus.

14. Procédé de soudage par résistance selon l'une des revendications précédentes,
**caractérisé en ce**
- **qu'**avant le soudage, un bord frontal du conducteur (4) est appliqué contre une paroi latérale (6b) de l'évidement (6).

15. Procédé de soudage par résistance selon l'une des revendications précédentes,
**caractérisé en ce**
- **que** le conducteur (4) est aplati dans la zone de soudage.
